# EUROPEAN PATENT APPLICATION

(11) **EP 0 583 207 A1**
(43) Date of publication of application: **16.02.1994**
(21) Application number: 93480093.9
(22) Date of filing: 30.06.1993
(51) Int. Cl.: G06F 3/033

(54) **Method of and apparatus for providing contextual navigation mechanism**

(30) Priority: 27.07.1992 US 919436
(71) Applicant: INTERNATIONAL BUSINESS MACHINES CORPORATION, Armonk, N.Y. 10504 (US)
(72) Inventor: Johnson, William J., Flower Mound, TX 75028 (US); Williams, Marvin L., Lewisville, TX 75067 (US)
(74) Representative: Colas, Alain

(57) **Abstract**

Automatic navigation to a window containing a user specified search criteria is provided. A user may invoke a number of application programs which display various windows, panels, icons, full screen sessions, and other objects onto a multitasking windowing environment desktop. A service is provided which allows the user to specify a search criteria such as the string "PROGRESS". The service searches desktop sessions and objects until finding an occurrence of the string "PROGRESS". Upon finding the occurrence of the search string, the service automatically pops the window or full screen session containing the search string into focus.

## Description

This invention relates in general to data processing systems, and in particular to a method of, and apparatus for, providing automatic navigation in a multitasking windowing environment to a window containing a user specified search criteria.

Conventional data processing systems may provide capabilities for navigating between multiple windows displayed by a multitasking windowing environment. The window currently selected by a user for display in the foreground and for active input is known as the window having focus. The user may change the focus by use of either an implicit focus model or an explicit focus model.

In an implicit focus model, such as that provided by the Open Software Foundation, Inc.'s OSF/MotifTM Windowing Environment, the focus is automatically changed to that window upon which the mouse controlled cursor or pointer resides. When the user moves the cursor on to a portion of a window which is partially hidden, the window automatically pops into focus so that the entire window is then visible.

In an explicit focus model, such as that provided by the International Business Machines Corp. 's OS/2TM Presentation Manager windowing environment, the focus is only changed by the user upon an explicit command from the user. If the user wishes to change the focus, then the user moves the pointer on to a portion of a window which is partially hidden, and then the user clicks the mouse to pop the window into focus so that the entire window is then visible. Alternatively, under some explicit focus models, the user may be able to issue explicit commands from a keyboard such as a NEXT WINDOW command or a PREVIOUS WINDOW command. A NEXT WINDOW command changes the focus to a window which first gained focus after the currently displayed window. A PREVIOUS WINDOW command changes the focus to a window which had focus just prior to the currently displayed window. These commands allow the user to navigate through a window queue which is sorted in an order in which the various windows first gained focus.

Note that under both of these focus models, the user may only change the focus based on either-the location of a pointer on the display or the location of a window in a window queue. However, if a user desires to change the focus based on the content of a window, no capability is provided by conventional systems. If the user desires to change the focus to a window containing specific information, then conventional systems fail to change the focus to the desired window. The user must manually change the focus to other windows and visually search these windows to find the window containing the specific information.

Thus the prior art provides no method of, or apparatus for, providing automatic navigation in a multitasking windowing environment to a window containing a user specified search criteria. As such, there is a need for a method of, and apparatus for, providing automatic navigation in a multitasking windowing environment to a window containing a user specified search criteria.

The invention disclosed herein comprises a method of, and apparatus for, providing automatic navigation in a multitasking windowing environment to a window containing a user specified search criteria. The method and apparatus described herein substantially eliminate or reduce the difficulties of attempting to navigate to a window containing such search criteria by providing automatic navigation to a window containing a user specified search criteria.

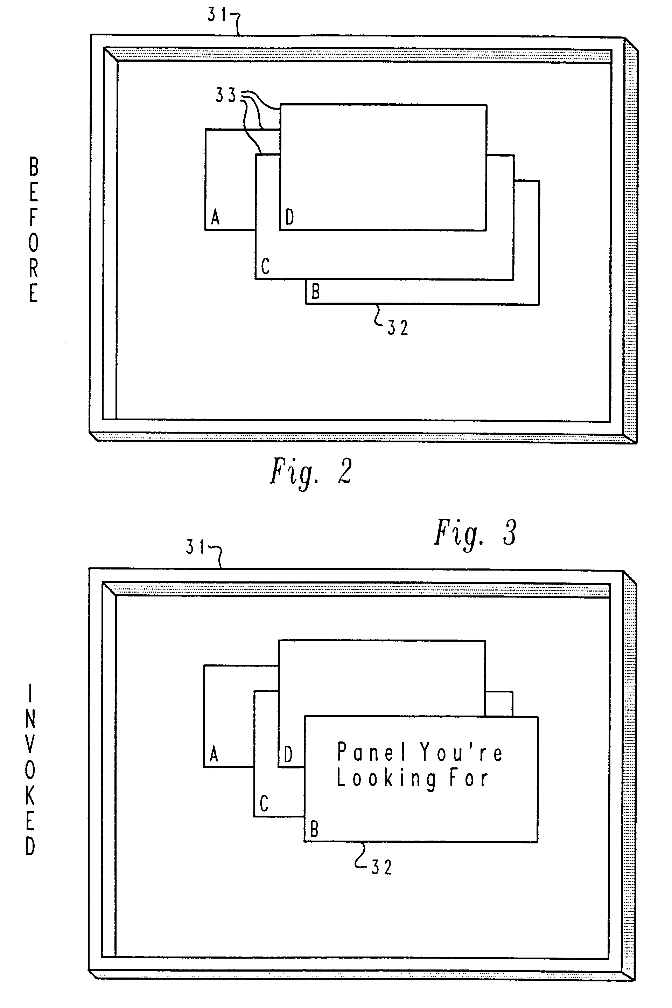

In accordance with one aspect of the present invention, automatic navigation to a window containing a user specified search criteria is provided. The window may be partially hidden, fully hidden, or iconized. A user may invoke a number of application programs which focus panels and other objects onto a desktop. Somewhere in the history of desktop interaction, the user recalls seeing text on a panel which is of interest. Unfortunately, there are so many objects on the desktop, that the panel which contained the interesting text is put out of view by other panels and objects which subsequently are placed onto the desktop. The user must tediously use a mouse or keyboard to rearrange the desktop objects such that the desired panel is put back into view. Figure 2 illustrates a desktop 31 where panel B 32 contains the interesting textual information, but panel B 32 is blocked out of view by other panels 33. The present invention allows the user to specify a search string which is input to a search service for matching the string to the text on panel B 32 and automatically surfacing the panel into focus. Figure 3 illustrates desktop 31 after the panel B 32 is found by matching the search criteria. This example is particularly demonstrative when panel B 32 is completely out of sight with no easy way for a user to know it exists and no direct way to select it.

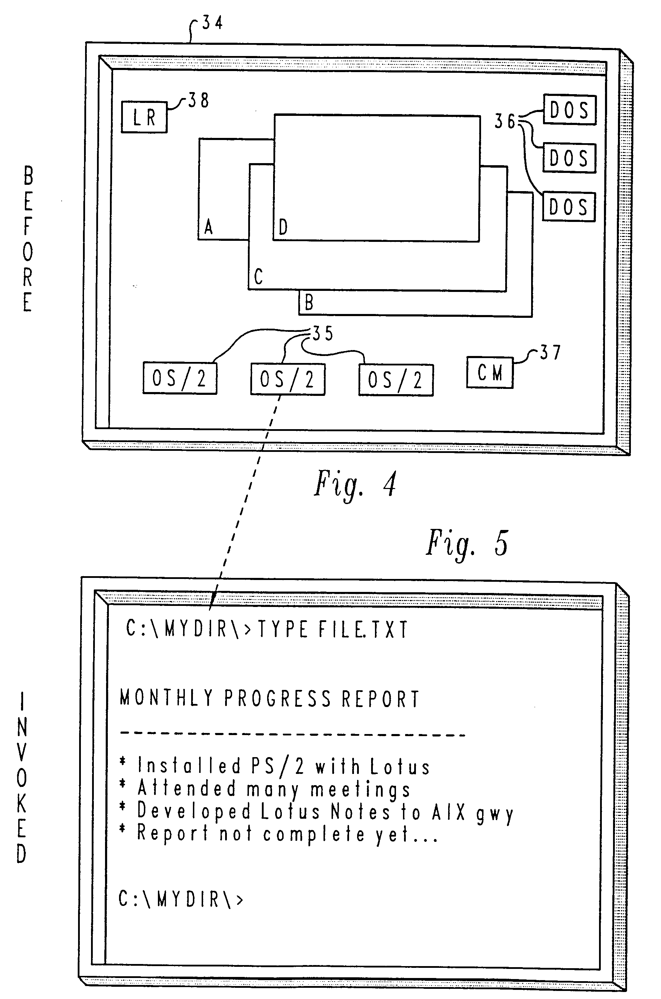

Another aspect of this invention is automatic navigation to a full screen session containing a user specified search criteria. Figure 4 illustrates an OS/2 desktop 34 with icons including full screen sessions for OS/2 35, DOS 36, communications manager 37, and LAN Requester 38. Figure 4 also shows some panels which are associated with Presentation Manager application programs. Consider what would happen if the user remembered typing out a subordinate's progress report in a full screen but did not remember which full screen it was done in. The user would have to manually select each OS/2 and DOS session, trial and error, to see which session it was typed out in. The present invention allows the user to specify a search criteria such as the string "PROGRESS". The present invention would search desktop sessions and objects until finding the occurrence of the string "PROGRESS". Figure 5 shows that one of the OS/2 full screen sessions 35 contained the text string and the system automatically transposes to that full screen session. Note that the OS/2 full screen session was iconized prior to transposition.

Another aspect of this invention is that if a search yields multiple objects containing a user specified search criteria, then a user interface is provided to allow selection and focus of the objects yielded by the search.

The present invention has the advantage of allowing a user to locate an application program within a desktop without tedious manual desktop object relocation or trial and error searching.

The present invention has the further advantage of allowing a a user to locate an application program within a desktop based on a user specified search criteria.

The present invention has the further advantage of allowing an application program, located by a search based on a user specified search criteria, to be popped into focus.

The present invention has the further advantage of allowing an application program within a fully hidden window, located by a search based on a user specified search criteria, to be popped into focus.

The present invention has the further advantage of allowing an application program within a partially hidden window, located by a search based on a user specified search criteria, to be popped into focus.

The present invention has the further advantage of allowing an application program within a minimized or iconized window, located by a search based on a user specified search criteria, to be popped into focus.

The present invention has the further advantage of allowing an application program within a full screen session, located by a search based on a user specified search criteria, to be popped into focus.

For a more complete understanding of the present invention and the advantages thereof, reference is now made to the Detailed Description in conjunction with the attached Drawings, in which:
Figure 1 is a block diagram of a data processing system used in performing the method of the present invention and forming part of the apparatus of the present invention;
Figure 2 and Figure 3 illustrate a hidden window preferred embodiment in accordance with the present invention;
Figure 4 and Figure 5 illustrate an iconized window and a full screen session preferred embodiment in accordance with the present invention;
Figure 6 is a block diagram illustrating a preferred embodiment in accordance with the present invention;
Figure 7 is a flow chart illustrating the operations preferred in carrying out the present invention; and
Figure 8 is a flow chart, continued from Figure 7, illustrating the operations preferred in carrying out the present invention.

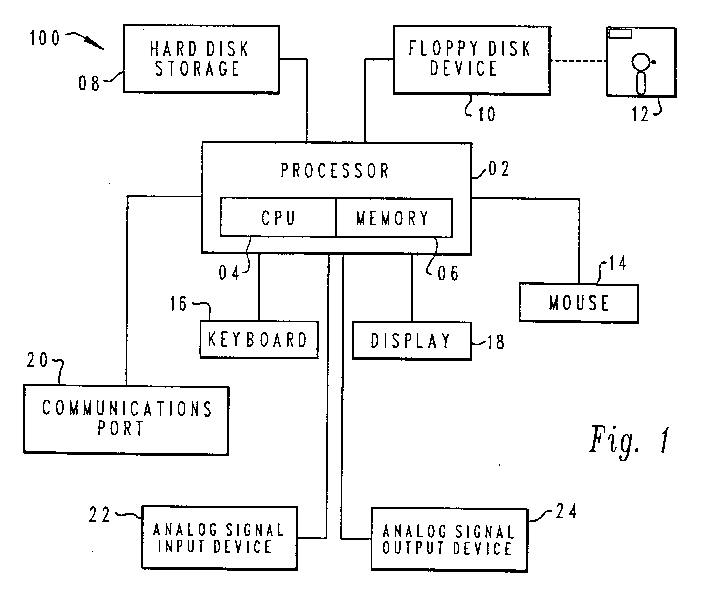

Referring first to Figure 1, there is shown in block diagram form, a data processing system 100 according to the present invention. The data processing system 100 includes a processor 02, which includes a central processing unit (CPU) 04, and a memory 06. Additional memory, in the form of a hard disk file storage 08 and a floppy disk device 10, is connected to the processor 02. Floppy disk device 10 receives a diskette 12 which has computer program code recorded thereon that implements the present invention in the data processing system 100. The data processing system 100 may include user interface hardware, including a mouse 14 and a keyboard 16 for allowing user input to the processor 02 and a display 18 for presenting visual data to the user. The data processing system 100 may also include a communications port 20 for communicating with a network or other data processing systems. The data processing system 100 may also include analog signal devices, including an analog signal input device 22 for entering analog signals into the data processing system 100, and an analog signal output device 24 for reproducing analog signals.

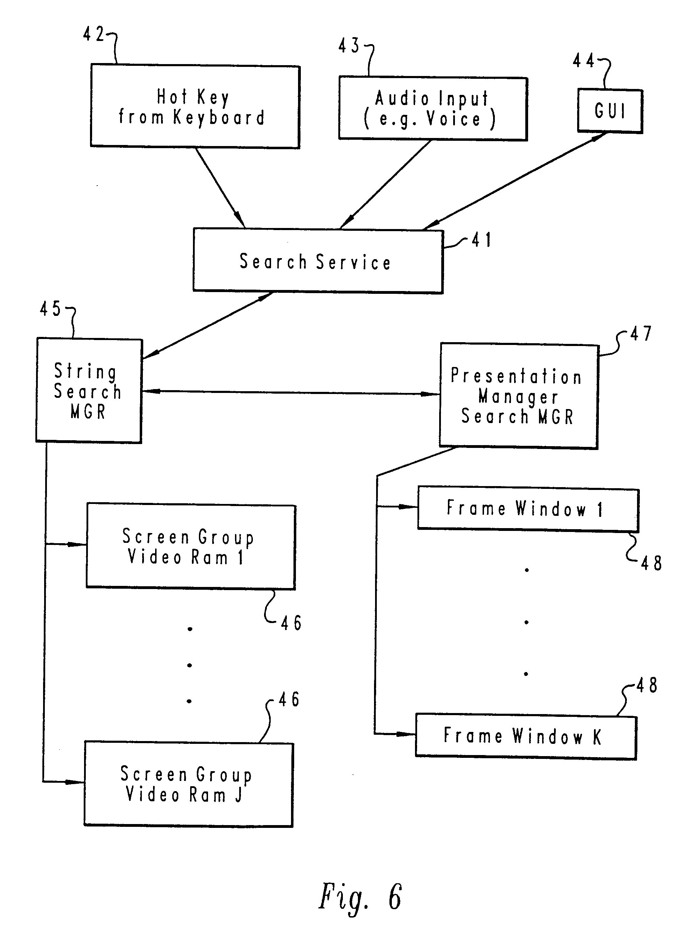

Referring next to Figure 6, a preferred embodiment of the present invention is illustrated. The Search Service 41 is a terminate and stay resident type of program which awaits detection of a command for performing a search. A hot key sequence 42, voice command 43, etc. can be used to activate the service. Upon detection of a search request, a graphical user interface (GUI) 44 can be presented to the user for entering search criteria (or a voice command itself could enter the data to search for). After search criteria is entered, the Search Service 41 invokes a String Search Manager 45 for searching active screen groups 46 on the system. The video RAM within each active screen group 46 is interrogated for the search criteria. The String Search Manager 45 also invokes a Presentation Manager Search Manager 47 for interfacing to the system user interface kernel for searching windows and other objects 48 not covered in system screen groups. The Presentation Manager Search Manager 47 is a Presentation Manager interface manager for an OS/2 machine running Presentation Manager, but encompasses any window and icon manager for an arbitrary system. After a list of produced sessions and windows has been produced and communicated from the String Search Manager 45 to the Search Service 41, the Search Service 41 manages user control for transposing to an occurrence in the list and allowing the user to interact for changing to the next session or window satisfying the search in the list. Transposing to an application window, session, etc. occurs exactly as though a mouse or keystroke selection caused transposing to there.

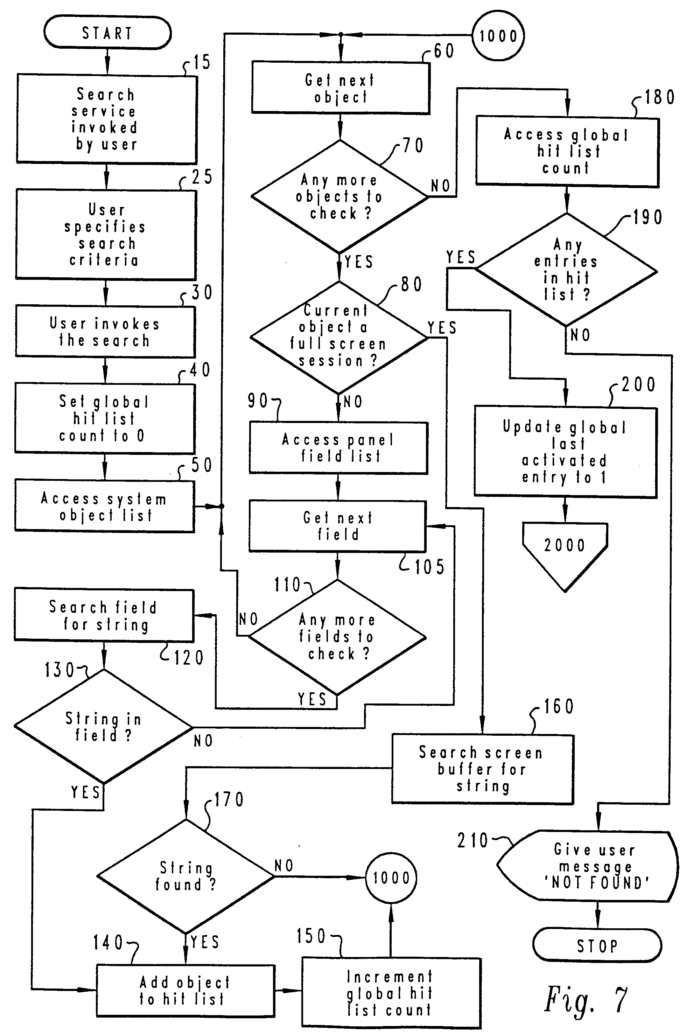

Referring now to Figure 7 through Figure 8, flowcharts illustrating operations preferred in carrying out the present invention are shown. In the flowcharts, the graphical conventions of a diamond for a test or decision and a rectangle for a process or function are used. These conventions are well understood by those skilled in the art, and the flowcharts are sufficient to enable one of ordinary skill to write code in any suitable computer programming language.

Referring now to Figure 7, after the start of the program, process block 15 awaits invocation by a user. The user may invoke by pressing a hot key from the keyboard, by selecting a representative icon by use of a mouse, or by another appropriate input invocation such as voice command activation. After invocation by the user, process block 25 allows the user to specify a search criteria. The search criteria is a character string which may be contained in one or more of the objects on the desktop. After the user has successfully entered the search criteria, process block 30 allows the user to invoke a search. Thereafter, process block 40 sets a Global Hit List Count equal to zero. The Global Hit List Count represents the number of objects found to contain the search criteria. Thereafter, process block 50 accesses a Windowing System Object List. The Windowing System Object List represents a list of active application programs for which objects may be displayed in the desktop. For example, in OS/2 Presentation Manager, the Windowing System Object List may be produced by using the WinBeginEnumWindows and WinGetNextWindow commands. Thereafter, process block 60 gets the next object stored in the Windowing System Object List. During its first execution, process block 60 gets the first object stored in the Windowing System Object List. Thereafter, decision block 70 determines if there are any more objects to search from the Windowing System Object List. If there are any more objects to search from the Windowing System Object List, then decision block 80 determines if the current object is a full screen session. If the current object is a full screen session, then process block 160 searches the current object's screen buffer for the search string. Thereafter, decision block 170 determines if the search string was found. If the search string was found, then process block 140 adds the current object to a Hit List. The Hit List contains a list of the objects which are found to contain the search string. Thereafter, process block 150 increments a Global Hit List Count. The Global Hit List Count represents the number of objects which are found to contain the search string. Thereafter, the program loops back to process block 60 to process the next object in the Windowing System Object List. This processing path is illustrated by flowchart connectors 1000 on Figure 7.

Returning now to decision block 170, if the search string was not found, then the program loops back to process block 60 to process the next object in the Windowing System Object List. This processing path is illustrated by flowchart connectors 1000 on Figure 7.

Note that blocks 160 and 170 correspond to the String Search Manager 45 previously described in Figure 6.

Returning now to decision block 80, if the current object is not a full screen session (if the current object is a panel), then process block 90 accesses the field list for the current panel. The panel field list represents a list of the components contained in an object. Thereafter, process block 105 gets the next field stored in the panel field list. During its first execution, process block 105 gets the first field stored in the panel field list. Thereafter, decision block 110 determines if there are any more fields to search from the panel field list. If there are more fields to search from the panel field list, then process block 120 searches the current field for the search string. Process block 120 uses a character string comparison if the current field contains character data. Process block 120 uses optical character recognition in combination with the character string comparison if the current field contains pixel image data. Thereafter, decision block 130 determines if the search string was found in the field. If the search string was found in the field , then the program continues to process block 140 to add the current panel object to the Hit List.

Returning now to decision block 130, if the search string was not found in the field, then the program loops back to process block 105 to get the next field for processing.

Note that blocks 90, 105, 110, 120, and 130 correspond to the Presentation Manager Search Manager 47 previously described in Figure 6.

Returning now to decision block 110, if there are not any more fields to search from the panel field list, then the program loops back to process block 60 to get the next object for processing.

Returning now to decision block 70, if there are not any more objects to search from the Windowing System Object List, then process block 180 accesses the Global Hit List Count. Thereafter, decision block 190 determines if there are any entries in the Hit List (if the Global Hit List Count is greater than zero). If there are not any entries in the Hit List, then process block 210 provides a message or other notification means to the user that the search string was not found. Thereafter, the program stops.

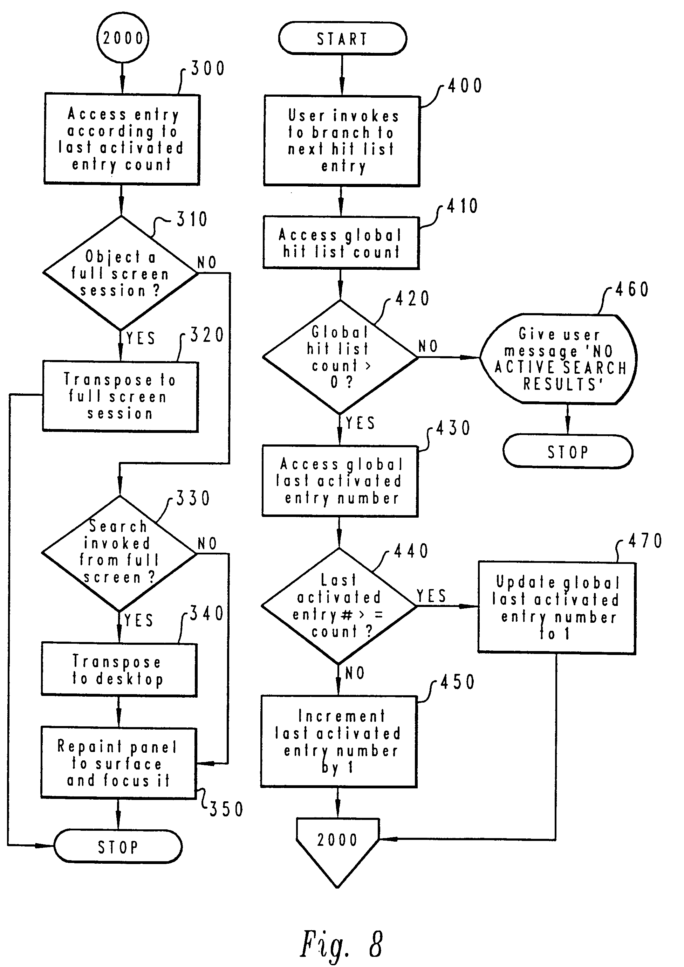

Returning now to decision block 190, if there are any entries in the Hit List (if the Global Hit List Count is greater than zero), then process block 200 sets a Global Last Activated Entry equal to one. The Global Last Activated Entry represents an index into the Hit List, and is the index of an object containing the search criteria last placed into focus. For example, when the Global Last Activated Entry is set equal to one, the first object containing the search criteria is placed into focus. Thereafter, the program continues to process block 300 on Figure 8. This processing path is illustrated by flowchart connectors 2000 on Figure 7 and Figure 8.

Referring next to Figure 8, after control passes from process block 200 on Figure 7 to process block 300 on Figure 8, as illustrated by flowchart connectors 1000 on Figure 7 and Figure 8, process block 300 accesses an entry describing an object from the Hit List according to the Global Last Activated Entry. For example, if the Global Last Activated Entry is equal to one, then process block 300 accesses the first object on the Hit List. Thereafter, process block 310 determines if the object is a full screen session. If the object is a full screen session, then process block 320 transposes to that object's full screen session and displays that object's full screen session on the display. Thereafter, the program stops.

Returning now to decision block 310, if the object is not a full screen session, then decision block 330 determines if the search was invoked from a full screen session. If the search was invoked from a full screen session, then process block 340 transposes to the desktop and displays the desktop on the display. Thereafter, process block 350 repaints the panel object to surface it and give it focus on the desktop display. Thereafter, the program stops.

Returning now to decision block 330, if the search was not invoked from a full screen session, then the program continues to process block 350 to repaint the panel object to surface it and give it focus on the already displayed desktop.

Referring now to process block 400 on Figure 8, process block 400 illustrates a second entry point for the program. In addition to providing a first entry point upon a user invoking a search, as illustrated by process block 15 on Figure 7, the program also provides a second entry point upon a user invoking the program to display the next object containing the search string. After the start of the program, process block 400 awaits invocation by a user. The user may invoke by pressing a second hot key from the keyboard, by selecting a second representative icon by use of a mouse, or by another second appropriate input invocation. After invocation by the user, process block 410 accesses the Global Hit List Count. Thereafter, decision block 420 determines if the Global Hit List Count is greater than zero. If the Global Hit List Count is not greater than zero, then process block 460 gives a message to the user that there are no active search results. This message is provided when there are no objects containing the search string and the user requests to display the next object containing the search string. Thereafter, the program stops.

Returning now to decision block 420, if the Global Hit List Count is greater than zero, then process block 430 accesses the Global Last Activated Entry. Thereafter, decision block 430 determines if the Global Last Activated Entry is equal to the Global Hit List Count. If the Global Last Activated Entry is not equal to the Global Hit List Count, then process block 450 increments the Global Last Activated Entry by one. Thereafter, the program continues to process block 300 to display the next object containing the search string. This processing path is illustrated by flowchart connectors 2000 on Figure 8.

Returning now to decision block 440, if the Global Last Activated Entry is equal to the Global Hit List Count, then process block 470 sets the Global Last Activated Entry equal to one. This handles the situation where the last object displayed is also the last object in the Hit List, and the program must wrap around to the first object in the Hit List to display the next object. Thereafter, the program continues to process block 300 to display the next object containing the search string. This processing path is illustrated by flowchart connectors 2000 on Figure 8.

## Claims

1. A method of providing automatic navigation in a multitasking windowing environment to an object containing a user specified search criteria, said method comprising the steps of:
entering a search string;
searching for the search string within a plurality of objects displayable in the multitasking windowing environment; and
providing focus to the object containing the search string.

2. The method of claim 1, wherein the step of providing focus to the object containing the search string, further comprises the steps of:
storing an identification of a plurality of objects containing the search string; and
providing focus to one of the plurality of objects containing the search string, wherein the one of the plurality of objects is selected by the user.

3. The method of claim 1, wherein the object is a full screen session.

4. The method of claim 1, wherein the object is a hidden window.

5. The method of claim 1, wherein the object is an iconized window.

6. An apparatus for providing automatic navigation in a multitasking windowing environment to an object containing a user specified search criteria, said apparatus comprising:
means for entering a search string;
means for searching for the search string within a plurality of objects displayable in the multitasking windowing environment; and
means for providing focus to the object containing the search string.

7. The apparatus of claim 6, wherein the means for providing focus to the object containing the search string, further comprises:
means for storing an identification of a plurality of objects containing the search string; and
means for providing focus to one of the plurality of objects containing the search string, wherein the one of the plurality of objects is selected by the user.

8. The apparatus of claim 6, wherein the object is a full screen session.

9. The apparatus of claim 6, wherein the object is a hidden window.

10. The apparatus of claim 6, wherein the object is an iconized window.

11. A method of permitting automatic navigation in a multitasking windowing environment to an object containing a user specified search criteria, said method comprising the steps of:
providing means for entering a search string;
providing means for searching for the search string within a plurality of objects displayable in the multitasking windowing environment; and
providing means for providing focus to the object containing the search string.
